# EUROPEAN PATENT SPECIFICATION

(11) **EP 1 596 193 B1**
(45) Date of publication and mention of the grant of the patent: **20.06.2007**
(21) Application number: 05252618.3
(22) Date of filing: 27.04.2005
(51) Int. Cl.: B01J 20/281, B01D 15/08, C07F 7/18, C07F 7/08, B01J 20/10

(54) **Novel stationary phases for use in high-performance liquid chromatography**
Neue stationäre Phasen zur Verwendung in der Hochleistungsflüssigchromatographie (HPLC)
Nouvelles phases stationnaires pour utilisation en chromatographie liquide à haute performance (CLHP ou HPLC)

(30) Priority: 30.04.2004 US 837265; 13.10.2004 US 965414
(43) Date of publication of application: 16.11.2005
(73) Proprietor: Agilent Technologies, Inc., Santa Clara, CA 95051 (US)
(72) Inventor: Chen, Wu, Newark, De 19711 (US)
(74) Representative: Tollett, Ian

(56) References cited:
- EP-A- 0 269 080
- US-A- 5 296 624
- US-A- 5 405 766
- AHMAD I ET AL: "Synthesis of silacycloalkenes and silaspirenes by Ru(II)-catalyzed ring-closing metathesis reactions" JOURNAL OF ORGANOMETALLIC CHEMISTRY, ELSEVIER-SEQUOIA S.A. LAUSANNE, CH, vol. 625, no. 2, 22 April 2001 (2001-04-22), pages 160-172, XP004234580 ISSN: 0022-328X

## Description

This invention relates to substrates and a column for use in chromatography, and the processes for manufacturing the materials. In particular, the invention relates to packing materials for columns for liquid chromatography.

Silica particles are by far the most widely used supports for reversed-phase liquid chromatography stationary phases. The high mechanical stability, monodisperse particles, high surface area, and easily tailored pore size distributions make silica superior to other supports in terms of efficiency, rigidity, and performance. Silica bonding chemistry is also allows for a wide variety of stationary phases with different selectivies to be made on silica [1, 2,3].

Silanes are the most commonly used surface modifying reagents in liquid chromatography. For example, "An Introduction to Modern Liquid Chromatography," Chapter 7, John Wiley & Sons, New York, N.Y. 1979; J. Chromatogr. 352, 199 (1986); J. Chromatogr., 267, 39 (1983); and Advances in Colloid and Interface Science, 6, 95 (1976) each disclose various silicon-containing surface modifying reagents. Typical silane coupling agents used for silica derivatization have general formula EtOSiR₁R₂R₃ or ClSiR₁R₂R₃, where R represents organic groups, which can differ from each other or all be the same. For reversed-phase chromatography, the silane coupling agent has traditionally been -Si(CH₃)₂(C₁₈H₃₇), where C₁₈H₃₇, octadecyl group, yields a hydrophobic surface. The reaction, when carried out on the hydroxylated silica, which typically has a surface silanol concentration of approximately 8 µmol/m², does not go to completion due to the steric congestion imposed by the R groups on the coupling agent [3]. To improve the quality of the original chemically bonded phase by blocking access to some residual silanol groups on the silica surface, the bonded phase is usually further endcapped using small organic silanes. The endcapping is usually carried out with compounds able to generate trimethylsilyl groups, (CH₃)₃Si-, the most popular being trimethylchlorosilane (TMCS) and hexamethyldisilazane (HMDS). The majority of free surface silanols, which are under dimethyloctadecylsilyl group, cannot react with the endcapping because of steric hindrance. In the traditional endcapping step, only ~0.2 µmol/m² surface silanol groups are bonded based on the carbon loading data. The highest coverage attained in laboratory studies has been ~4.5 µmol/m², while the coverage available in commercial chromatography column is much less, usually on the order 2.7-3.5 µmol/m² even after endcapping [4].

These residual surface silanols interact with basic and acidic analytes via ion exchange, hydrogen bonding and dipole/dipole mechanism. This secondary interaction between analytes and residual silanol groups create problems, including increased retention, excessive peak tailing, especially at mid pH range for basic compounds, and irreversible adsorption of some analytes.

Basic compounds appear widely in different areas, such as the environmental, chemical, food, and pharmaceutical industries. In the latter in particular, over 80% of commercialized drugs are estimated to possess a basic function. Therefore, it is of crucial importance to develop practical HPLC stationary phases having minimized surface silanol activity.

To overcome the problems of residual silanol activity, many methods have been tried such as the use of ultrapure silica, carbonized silica, coating of the silica surface with a polymeric composition, endcapping the residual silanol groups, and addition of suppressors such as long chain amines to the eluent [5]. In practice, none of these approaches is totally satisfactory. A general review of deactivating silica support is given by Stella et al. [Chromatographia (2001), 53, S-113 - S115].

One method to eliminate surface silanols by extreme endcapping is described in U.S. 5,134,110. While the traditional endcapping can physically bond some residual silanol groups, at least 50% of the surface silanols remain unreacted. U. S. 5,134,110 describes an endcapping method of octadecyl-silylated silica gel by high temperature silylation [6, 7]. The polymeric chemically bonded phases originated from trichlorosilanes were endcapped using hexamethyldisilazane or hexamethylcyclotrisiloxane at very high temperature, above 250 °C, in a sealed ampoule. The resulting endcapped phases were shown to perform excellently on the Engelhardt test. However, polymeric phases usually have poor mass transfer and poor reproducibility. Finally, the high temperature of silylation in a seal ampoule is not practical and difficult to perform commercially compared with the traditional liquid phase endcapping procedure.

One method is to introduce polar embedded groups in the long octadecyl chain. These embedded groups, generally containing nitrogen atoms and amide such as in European Patent Application 90302095.4 [8-12], carbamate such as disclosed in U. S. 5,374,755 [13, 14], and most recently urea groups [15], have shown that they can play an important role to minimize the undesirable silanol interactions. Phases with an incorporated polar group clearly exhibit lower tailing factors for basic compounds, when compared with traditional C18 phases. Some mechanisms have been proposed, while some evidence leads to the belief that the surface layer of an embedded polar group phase should have a higher concentration of water due to the hydrogen bonding ability of the polar groups near the silica surface. This virtual water layer suppresses the interaction of basic analytes with residual surface silanols and permits separation with mobile phase having 100% water [16].

On the other hand, the presence of this water layer seems to contribute to the more rapid dissolution of these silica supports when compared to their alkyl C8 and C18 counterparts. In a systematic column stability evaluation by J. Kirkland [17], an embedded amide polar stationary phase was reported to be less stable. This result may be predictable, due to the higher water content near the underlying silica surface for polar embedded phases. The embedded polar groups also cause adsorption of some analytes when the phases are hydrolyzed or the phases are not fully reacted during phase preparation [15], leaving amine or hydroxyl groups on the surface. For example, the hydrolyzed amide phase leaves aminopropyl moieties on the surface, and can strongly adsorb acidic and polar compounds, causing peak tailing or missing.

The polar embedded phases are also more hydrophilic than the traditional C18 phases. The retention of the analytes is much less than on the tradition C18 columns. As a result, the phase selectivity is quite different from traditional C18, which causes to change the order of peak sequence. The method developed on traditional C18 columns cannot be transferred to polar embedded phase columns.

Another method to address the problem of reactive surface silanols is to use a phase which can sterically protect surface silanols. U.S. 4,705,725 to Du Pont describes that bulky diisobutyl (with C18) or isopropyl (with C8, C3, and C14 amide) side chain groups (Zorbax^{™} Stable Bond reversed-phase columns) stabilize both long and short chain monofunctional ligands and protect them from hydrolysis and loss at low pH [18]. The bulky side groups increase the hydrolytic stability of the phase. Such a moiety is less vulnerable to destruction at low pH, and better shields the underlying silanols. The sterically protected phases are extremely stable at low pH. The sterically protected silane phases are not endcapped; therefore, the loss of small, easily hydrolyzed endcapping reagents under acidic mobile phase condition is avoided. At pH < 3, the phase have excellent performance in terms of peaks, reproducibility, and lifetime. In this pH range, the silanol groups on type B silica are nearly completely protonated, and as a result, they do not act as sites for secondary interaction. The coverage density is, however, much lower than for dimethyl ODS phases. The ligand density of diisobutyloctadecyl phase is ~2 µmol/m² when compared to the related classical dimethyloctadecyl phase with a ligand density of 3.37 µmol/m². U.S. 5,948,531 discloses the use of bridged propylene bidentate silanes or a bidentate C18 phase (Zorbax^{™} Extend-C18 columns), to restricts analytes to access to residual silanols by incorporating a propylene bridge between two C18 ligands [19]. The bidentate C18 phase retains the benefits of monofunctional silane phases (high column efficiency, reaction repeatability) while demonstrating good stability in high and low pH mobile phases. Zorbax Stable-Bond C18 (SB-C18) and Zorbax Extend-C18 columns also have very similar selectivity to the traditional C18 columns.

In one embodiment, the invention provides a stationary phase for use in chromatography having side groups comprising one or more unsaturated groups such as vinyl, allyl, ethynyl, propynyl as side groups. In another embodiment, the invention provides a method for neutralizing reactive silanols using endcapping reagents comprising one or more unsaturated groups such as vinyl, allyl, ethynl, propynyl, and the like. In one aspect, stationary phases according to the invention comprise a hydrophobic layer. In another aspect, the stationary phases comprise reduced surface silanol activity, which may result in reduced peak trailing during separation of compounds.

In one aspect, the invention provides a silica substrate having a monofunctional silane or a mixture of two or three silanes with at least one silane comprising of at least one unsaturated hydrocarbon groups.
In another aspect, the silane comprises a compound of the formula shown below, silane is of form: 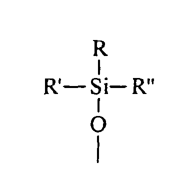 where, R = is a functional group, chromatagraphically useful, comprising, for example, alkyl, substituted alkyl, alkenyl, substituted alkenyl, aryl, substituted aryl, alkylamino, amide, ether, carbamate, ester, alcohol, a group for enabling hydrophobic interactions, ion exchange groups, and the like, R' = an unsaturated group, e.g., alkenyl or alkynyl groups, aryl groups, and R" = alkenyl, aryl, alkynyl, short chain alkyl substrate is silica. In one aspect, R" does not comprise an unsaturated hydrocarbon. In one aspect, the compound does not comprise a dimethyl-substituted tertiary carbon moiety.

The substrate can be bonded to one or more different silanes, and in another embodiment of the invention may be bonded to one group R, which provides chromatographic functionality to the substrate and also a second reagent, which provides an endcapping (i. e., a silanol-neutralizing) functionality.

The invention also provides a method to use chemical-containing amine groups to further deactivate the above substrate in either endcapping step or after endcapping step.

The invention also provides a method for making a substrate, which may be used across a broad range pH range from pH's- 1-12. In one aspect, the substrate may be used at a pH range from about pH 2-10. In certain aspects, the substrate may be used at room temperature. The process comprises preparing silanes comprising one or more unsaturated groups, including, but not limited to, divinyl alkyl silanes or methylvinyl alkyl silanes for bonding, and bonding silica with the unsaturated silanes to produce a bonded substrate. In one aspect, residual unbonded silica is contacted with a silane, such as trimethyl silane, monovinyl, divinyl, or trivinyl silane, and/or further treating with a chemical containing a amino group.

A number of preferred embodiments of the invention can be better understood with reference to the following detailed description and accompanying drawings.
Figure 1 shows a set of chromatograms illustrating the performance of a composition according to one embodiment of the invention with other column materials.
Figure 2 shows chromatograms comparing the performance of a series compositions according to aspects of the invention in separating basic compounds at pH 7.6.
Figure 3 shows chromatograms comparing the performance of a series compositions according to aspects of the invention in purifying benzoic acid at pH 2.7.
Figure 4 shows chromatograms further comparing the performance of a composition according to one aspect of the invention with another column.
Figure 5 shows a comparison of a composition according to one aspect of the present invention with another column at high pH.
Figure 6 shows a loadability comparison of a composition according to one aspect of the present invention with another column at pH 2.7 and pH 7.6.
Figure 7 shows two sets of chromatograms illustrating the loadability of a composition according to one aspect of the invention with another column.

The present invention provides a substrate, the surface of which is bonded to silanes that provide particular advantages when the support structure is used as a stationary phase for chromatography. The substrate surface is bonded to unsaturated silanes or a mixture of silanes containing at least one unsaturated silane, such as those containing alkenyl or alkynyl groups, including vinyl silanes such as divinyl silanes, methylvinyl silanes. Examples of silanes that can be used as bonding agents or in the binding mixtures includes, but are not limited to, chlorodivinyloctadecylsilane, chloromethylvinyloctadecylsilane, chlorodivinyloctylsilane, chloromethylvinyloctylsilane, chlorotrivinylsilane, (dimethylamino)divinyloctadecylsilane, (dimethylamino) methylvinyloctadecylsilane. The unsaturated silanes for stationary phases and endcapping reagents of the present invention have the following structure.

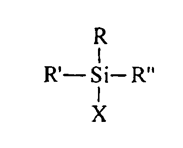

Where, R' = alkenyl, alkynyl, phenyl groups, such as vinyl, allyl, ethynyl, propynyl, or other alkenyl and alkynyl groups; R" = short chain, alkyl alkenyl, alkynyl; R = alkyl, substituted alkyl, alkenyl, substituted alkenyl, aryl, substituted aryl, alkylamine, amide, ether, alcohol, carbamate, ester, anion exchanger, cation exchanger; X = Cl, alkoxy such as methoxy, ethoxy, dialkylamino such as dimethylamino, diethylamino, dipropylamino groups.

The functional group R may be adapted to fit the intended application. For example, in reversed-phase chromatography carried out in the manner described in Chapter 7 of "Introduction to Modern Liquid Chromatography" (L. R. Snyder and J. J. Kirkland, John Wiley and Sons, New York, 1979) it is desirable for R of the silane to consist of alkyl or aryl groups comprising three to about 20 carbons (e.g., such as C3, C4, n--C8, n--C18, etc.), an amide such as -(CH₂)₃NHC(=O)R, carbamate such as -(CH₂)₃OC(=O)OR, to provide other functional groups to enable the desired hydrophobic interaction for retention to occur. For ion-exchange chromatography the R-groups can contain groups with ion-exchange functions, for example, --(CH₂)₃N⁺(CH₃)₃-- as an anion-exchanger, and --(CH₂)₃ --C₆H₄ --SO₃H as a cation-exchanger. For size-exclusion chromatography, particularly for the separation of highly polar, water-soluble biomacromolecules such as proteins, the surface of the substrate are modified with highly polar R groups, such as --(CH₂)₃ --O-CH(OH)--CHOH, the so-called "diol" function. For hydrophobic interaction chromatography, a weakly hydrophobic stationary phase is desired on the support. For example, R = methyl-, ethyl-, n-propyl, or isopropyl provide the modest hydrophobic interaction required by this mode of chromatographic retention. In the case of normal-phase chromatography, polar functional groups are incorporated into the silane as R groups, for example, --(CH₂)₃-NH₂ and --(CH₂)₃ --CN.

Well known techniques have been developed for attachment silanes to the surface of silica. See, for example, U.S. Pat. No. 4,919,804; C. A. Doyle et al., Chromatographic Science Series, 78, 293-323 (1998); U.S. Pat. No. 5,869,724; J. J. Kirkland et al., Anal. Chem., 70, 4344-4352 (1998); J. J. Kirkland et al., Anal. Chem., 61, 2-11 (1989); and K. D. Lork et al., Journal of Chromatography, 352, 199-211 (1986). A general discussion of the reaction of silanes with the surface of chromatographic supports is given in Chapter 7 of "An Introduction to Modern Liquid Chromatography" (L. R. Snyder and J. J. Kirkland, John Wiley and Sons, New York, 1979). Additional details on the reaction of silanes with porous silica is found starting on page 108 of, "Porous Silica" (K. K. Unger, Elsevier Scientific Publishing Co., New York, 1979). General discussions of silane reactions with a variety of materials are given in, "Chemistry and Technology of silicones" (W. Noll, Academic Press, New York, 1968). The silanes and endcapping reagents are bonded into silica surface using traditional liquid phase reaction.

The preparation and performance advantages of the present invention can be understood by reference to the following examples and the figures that are referred to therein.

### Example 1

### Preparation of chloromethylvinyloctadecylsilane

Organosilanes were purchased from Gelest, Inc. Morrisville, PA and solvents and other chemicals were purchased from Aldrich, Milwaukee, WI, unless specifically notified.

To a solution of dichloromethylvinylsilane (112.8 g, 0.8 mol) in THF (300 ml)/hexane (500 ml) was added octadecylmagnesium chloride in THF (800 ml, 0.5 M) dropwise at room temperature. After addition, the mixture was stirred at room temperature overnight. The solvent was removed by distillation. To residue was added hexane (500 ml). The white solid was filtered, and washed with hexane (400 ml x 3) under argon. The solvent was removed by distillation. The residue was distilled out under vacuum (at 180-190 °C/0.05 mm Hg) to yield the desired product, 63.32 g, yield 44.2%.

### Example 2

### Preparation of (dimethylamino)methylvinyloctadecylsilane

A four-neck flask was equipped with a mechanic stirrer, two dry-ice condensers. Nitrogen was purge gently through one dry-ice condenser and out from other condenser. Chloromethylvinyloctadecylsilane (63.32 g, 0.175 mole) and hexane (100 ml) were added into the flask. Dimethylamine gas was purged into the system through a dry-ice condenser and was dropped into the mixture. The white precipitate was formed. The reaction was followed by using GC. Dimethylamine and continuing to purge until the peak of chloromethylvinyloctadecylsilane disappeared on GC. The precipitate was filtered and washed with hexane (400 ml x 3) under argon. Hexane was removed by distillation. The residue was distilled under vacuum (at 210 °C/0.06mm Hg) to yield the desired product, 61.22 g, yield 94.8%.

### Example 3

### Preparation of (dimethylamino)trivinylsilane

(Dimethylamino)trivinylsilane was obtained by the same method as Example 2. A four-neck flask was equipped with a mechanic stirrer, two dry-ice condensers. Nitrogen was purge gently through one dry-ice condenser and out from other condenser. Chlorotrivinylsilane (103 g, 0.713 mole) and hexane (100 ml) were added into the flask. Dimethylamine gas was purged into the system through a dry-ice condenser and was dropped into the mixture. The white precipitate was formed. The reaction was followed by using GC. Dimethylamine was continued to purge until the peak of chlorotrivinylsilane disappeared on GC. The precipitate was filtered and washed with hexane (400 ml x 3). Hexane was removed by distillation. The residue was distilled under vacuum (at 22 °C/0.4 mm Hg) to yield the desired product, 74 g, yield 68%.

### Example 4

### Preparation of Methylvinyl-C18 phase with trivinylsilane endcapping

Type B Zorbax Rx-Sil silica support (Rx80), and was used for bonding and columns. The physical and surface properties of the highly purified type B Zorbax silica have been previously reported [19]. Surface area for this silica support typically is 180 m²/g, with pore size of 80 A. Reaction with the silica support was conducted as the same as previous reported [19]. Zorbax Rx80 was dried under vacuum at 110°C overnight before bonding.

Preparation of Methylvinyl-C18 packing from chloromethylvinyloctadecylsilane: Rx80 (30 g, 5 µm, surface area 184 m²/g, 44.15 mmol surface silanols) and toluene (150 ml) were charged into a four necked flask, equipped with a mechanic stirrer, a condenser, a Barrette trap, and a thermometer. Toluene (30 ml) was distilled out and collected in the Barrette trap. After the mixture was allowed cooled to below boiling point, the Barrette trap was removed, and imidozale (3.00 g, 44.16 mmol) was added, followed by addition of chloromethylvinyloctadecylsilane (23.75 g, 66.24 mmol). The mixture was stirred under reflux condition for 1 days. The mixture was filtered while still hot, washed with hot toluene, THF, MeOH. The silica particles were slurried in MeOH/water (80/20 v/v, 150 ml) for half-hour. Silica was filtered, washed with MeOH, CH₃CN, and dried at 110 °C under vacuum overnight.

Preparation of Methylvinyl-C18 packing from (dimethylamino)methylvinyloctadecylsilane: Rx80 (21 g, 5 µm, surface area 184 m²/g, 30.91 mmol surface silanols) and toluene (100 ml) were charged into a four necked flask, equipped with a mechanic stirrer, a condenser, a Barrette trap, and a thermometer. Toluene (30 ml) was distilled out and collected in the Barrette trap. After the mixture was allowed cooled to below boiling point, the Barrette trap was removed, and (dimethylamino)methylvinyloctadecylsilane (17.53 g, 47.76 mmol). The mixture was stirred under reflux condition for 1 days. The mixture was filtered while still hot, washed with hot toluene, THF, CH₃CN, and dried at 110 °C under vacuum overnight.

Endcapping Methylvinyl-C18 packing with chlorotrivinylsilane: Rx80 Methylvinyl-C18 (19.44 g) obtained from above and toluene (100 ml) were charged into a four necked flask, equipped with a mechanic stirrer, a condenser, a Barrette trap, and a thermometer. Toluene (30 ml) was distilled out and collected in the Barrette trap. After the mixture was allowed cooled to below boiling point, the Barrette trap was removed, and imidozale (2.00 g, 29.41 mmol) was added, followed by addition of chlorotrivinylsilane (6.38 g, 44.15 mmol). The mixture was stirred under reflux condition for 1 days. The mixture was filtered while still hot, washed with hot toluene, THF, MeOH. The silica particles were slurried in MeOH/water (80/20 v/v, 100 ml) for half-hour. Silica was filtered, washed with MeOH, CH₃CN, and dried at 110 °C under vacuum overnight.

Endcapping Methylvinyl-C18 packing with (dimethylamino)trivinylsilane: Rx80 Methylvinyl-C18 obtained from above (12.09 g) and toluene (60 ml) were charged into a four necked flask, equipped with a mechanic stirrer, a condenser, a Barrette trap, and a thermometer. Toluene (30 ml) was distilled out and collected in the Barrette trap. After the mixture was allowed cooled to below boiling point, the Barrette trap was removed, and (dimethylamino)trivinylsilane was added. The mixture was stirred under reflux condition for 1 days. The silica was filtered while still hot, washed with hot toluene, THF, CH₃CN, and dried at 110°C under vacuum overnight.

Table 1 lists the tailing factors of these columns as well as Rx80 XDB-C18 endcapped with hexamethyldisilazane/(dimethylamino)trimethylsilane (HMDS/DTMS) or (dimethylamino)trivinylsilane. Zorbax Rx80 XDB-C18 packing is comprised of a densely bonded dimethyl-silane-substituted C18 phase. All the phases have the similar carbon loading and no noticeable N and Cl detected on the surface. Endcapping is more efficient using (dimethylamino)trivinylsilane than using chlorotrivinylsilane. One can see Rx80 Methylvinyl-C18 columns, made from either (dimethylamino)methylvinyl-C18 silane in bonding or (dimethylamino)trivinylsilane in endcapping or both, have better peak shapes than XDB-C18 with HMDS endcapping. The Rx80 XDB-C18 with (dimethylamino)trivinylsilane endcapping (Table 1, V) also shows the better peak shapes than the Rx80 XDB-C18 with HMDS/DTMS endcapping (Table 1, VI), even the improvement is not as much as Rx80 Methylvinyl-C18 columns (Table 1, II, III, IV). Dimethylamino groups in the bonding or endcapping step and the double bonds tend to improve the peak shapes for the basic compounds, but not for acidic compounds. All the Rx80 Methylvinyl-C18 columns have worse peak tailing of benzoic acid than Rx80 XDB-C18 column. The column made from chloromethylvinyl-C18 silane and chlorotrivinylsilane endcapping shows worse peak tailing for both basic and acidic compounds among Rx80 methylvinyl-C18 columns.

| Table 1: Tailing Factor | | | | | |
|---|---|---|---|---|---|
| | Amitriptyline | | | | Benzoic acid |
| | pH 2.7 | | pH 7.6 | | pH 2.7 |
| | H₂O/MeOH | H₂O/ACN | H₂O/MeOH | H₂O/ACN | H₂O/MeOH |
| I | 1.27 | 1.44 | 1.37 | 2.56 | 3.29 |
| II | 1.14 | 1.23 | 1.03 | 1.84 | 2.75 |
| III | 1.16 | 1.21 | 1.09 | 1.53 | 2.53 |
| IV | 1.17 | 1.27 | 1.12 | 1.64 | 3.90 |
| V | 1.42 | 1.86 | 1.06 | 2.42 | 1.09 |
| VI | 1.39 | 1.77 | 1.08 | 2.87 | 1.02 |

Endcapping may be performed using chlorotrivinylsilane, (dimethylamino)trivinylsilane, chlorotrivinylsilane, (dimethylamino)trivinylsilane, (dimethylamino)trivinylsilane, as well as by using endcapping reagents known in the art.

In one aspect, end-capping is performed using trace amounts of an endcapping reagent, such as less than about 0.2 µM.

Endcapping using (dimethylamino)trivinylsilane can improve the peak shapes of the basic compounds as much as the bonding using (dimethylamino)octadecylsilane (Table 1, III and IV) even where the endcapping only covers about 0.1-0.2 µmol surface silanols while C18 bonding covers almost 3 µmol surface silanols

### Example 5

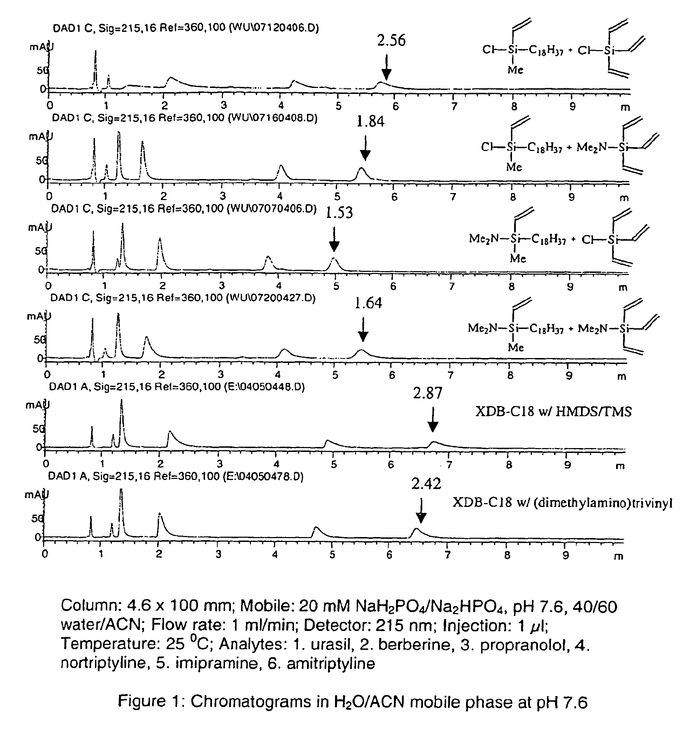

Figure 1 shows the chromatograms of these columns in H₂O/ACN mobile phase at pH 7.6.

### Example 6

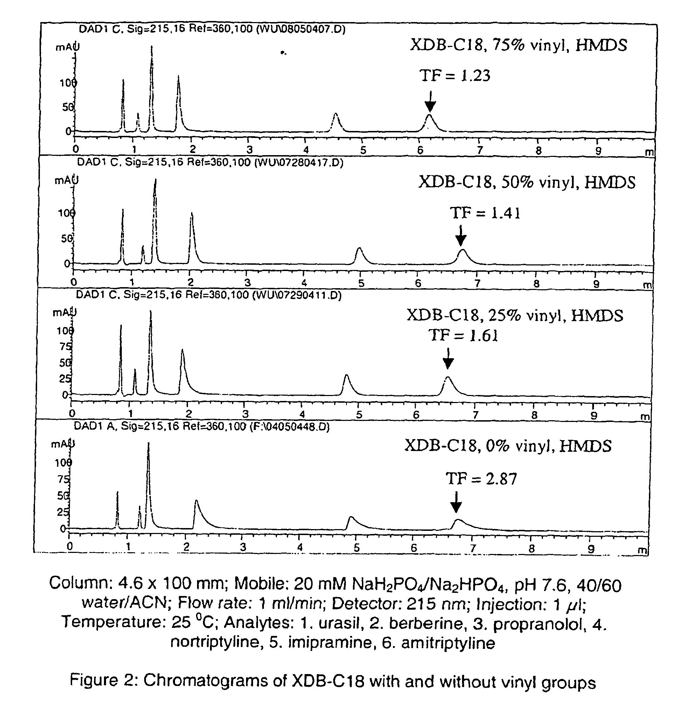

Figure 2 shows chromatograms of Rx80 XDB-C18 phases with 0%, 25%, 50%, 75% vinyl groups at pH 7.6 in ACN/water mobile phase. Zorbax Rx80 XDB-C18 packing is comprised of a densely bonded dimethyl-silane-substituted C18 phase exhaustively double-endcapped with dimethyl- and trimethylsilane groups by a proprietary process [17]. (Dimethylamino)dimethyloctadecylsilane is used in the bonding reaction. The mixed XDB-C18 phases with vinyl groups were prepared by the same bonding chemistry except a mixture of (dimethylamino)dimethyloctadecylsilane and (dimethylamino)methylvinyloctadecylsilane were used instead of just (dimethylamino)dimethyloctadecylsilane, with 25%, 50% and 75% dimethyl-C18 silane replaced by methylvinyl-C18 silane in the reaction and single endcapping with HMDS/DTMS. The tailing factor of amitriptyline drops from 2.87 for XDB-C18 to 1.23, 1.41, 1.64 and 2.87 for 75%, 50%, 25% and 0% vinyl groups respectively; the more vinyl group, the less tailing factor at pH 7.6 in water/ACN. Compared with standard XDB-C18 phase, the mixed phases showed much better peak shapes for basic compounds. The column with 25% vinyl groups has slightly more tailing than those with 50% and 75% vinyl groups.

### Example 6

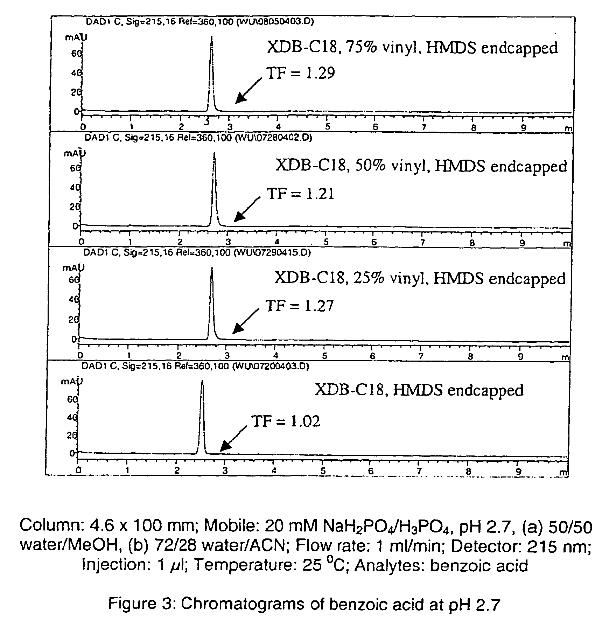

Figure 3 shows chromatograms of these phases for acidic compounds, benzoic acid, at pH 2.7. The tailing factor of benzoic acid increased slightly on XDB-C18 with vinyl groups compared with XDB-C18 phase. However, All these XDB-C18 with vinyl columns have the about same good peak shape of benzoic acid, with tailing factors of 1.29, 1.21, 1.27, and 1.02 for 75%, 50%, 25% and 0% vinyl groups respectively.

Table 2 summarizes the tailing factors of these columns as well as XDB-C18 with HMDS/DTMS endcapping column for amitriptyline and benzoic acid. The columns with methyl/vinyl mixed C18 phases have much lower tailing factor for amitriptyline than competitors' columns at pH 7.6, and the similar tailing factors for amitriptyline and benzoic acid at pH 2.7. At pH 2.7, the column with 50% vinyl has slightly better peak shapes of amitriptyline and benzoic acid than the column with 25% and 75% vinyl.

| Table 2: The tailing factors of amitriptyline and benzoic acid | | | | | |
|---|---|---|---|---|---|
| | Amitriptyline | | | | Benzoic acid |
| Column | pH 2.7 | | pH 7.6 | | pH 2.7 |
| | H₂O/MeO | H₂O/ACN | H₂O/MeOH | H₂O/ACN | H₂O/MeOH |
| Rx80 XDB-C18, 75% Vinyl, | 1.29 | 1.42 | 1.00 | 1.23 | 1.29 |
| Rx80 XDB-C18, 50% Vinyl, | 1.22 | 1.29 | 1.01 | 1.41 | 1.21 |
| Rx80 XDB-C18, 25% Vinyl, | 1.29 | 1.36 | 1.01 | 1.61 | 1.27 |
| Rx80 XDB-C18, 0% vinyl, | 1.39 | 1.77 | 1.08 | 2.87 | 1.02 |

### Example 7

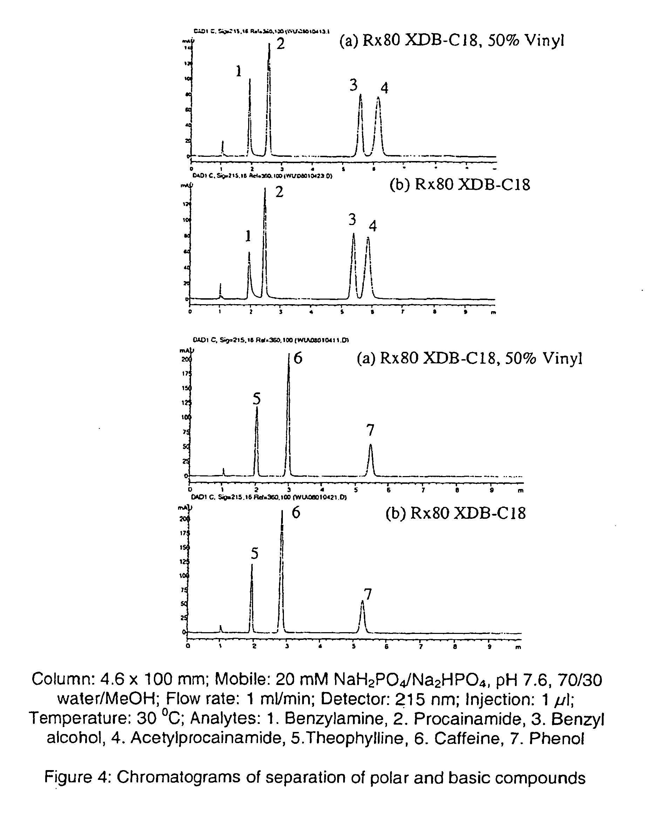

Figure 4 shows the chromatograms of polar and basic compounds (benzylamine, procainamide, benzyl alcohol, acetylprocainamide, theophylline, caffeine, phenol) on Rx80 XDB-C18 with 50% vinyl and Rx80 XDB-C18 columns. Rx80 XDB-C18 with 50% vinyl shows very similar selectivity of polar and basic compounds to Rx80 XDB-C18, but better peak shape for benzylamine (peak #1).

### Example 8

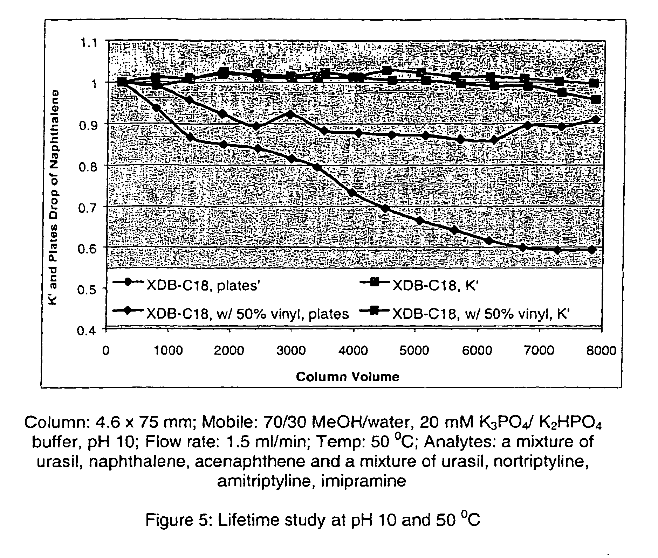

Figure 5 shows the comparison of stability of the XDB-C18 with 50% vinyl and XDB-C18 columns. Since the column is designed for use at mid pH, silica dissolution is the biggest problem for column lifetime. The lifetime of the column was evaluated at pH 10 and 50 °C. A neutral compound, naphthalene was used to monitor the column efficiency and retention. Efficiency drop indicates more about the rate of silica dissolution. XDB-C18 with 50% vinyl column shows less efficiency drop than XDB-C18, while K' of both columns is kept the same during the aging study.

### Example 9

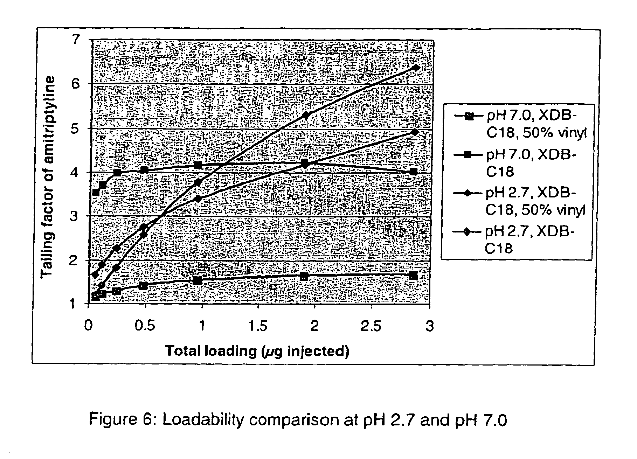

Figure 6 shows the comparison of loadability of XDB-C18 with 50% vinyl with XDB-C18. The loadability of the columns was evaluated at pH 2.7 and 7.0 in water/ACN mobile phases. Both columns have much less loadability at pH 2.7 than at pH 7. At pH 2.7, as both columns have good peak shapes, the loadability difference is not significant as at pH 7.0, at which tailing factor on XDB-C18 with 50% vinyl is much lower than on XDB-C18. At low sample injection (at analytical level), XDB-C18 with 50% vinyl has very good peak shapes at both pH 2.7 and pH 7.0. And at high sample injection (above analytical level) and at pH 2.7, XDB-C18 with vinyl has higher tailing factor after injections over 0.6 µg. XDB-C18 with 50% vinyl has the same trend of loadability as XDB-C18, but much better column loadability than XDB-C18 at pH 7.0 simply because XDB-C18 with vinyl has much less peak tailing.

### Example 10

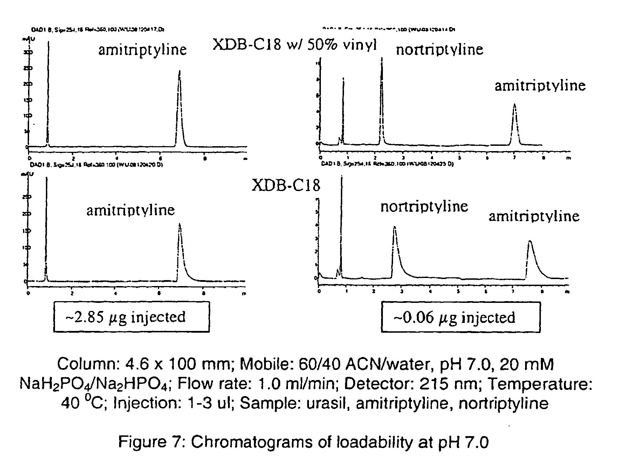

Figure 7 shows an example of chromatograms of loadability at pH 7.0. The tailing factor of amitriptyline on XDB-C18 with 50% vinyl increases from 1.17 for 0.06 µg injection to 1.67 for 2.85 µg injection, while the tailing factor on XDB-C18 increases from 3.54 to 4.02. The loadability of XDB-C18 with 50% vinyl is much higher than XDB-C18.

By using methylvinyl-C18 phase or by replacing some of methyl groups in Rx80 XDB-C18 phase with vinyl groups, silica strong acidic surface silanols can be deactivated by trace dimethylamine groups added into the double bonds. As a result, the column shows excellent peak shapes for basic compounds at low and mid pH, while still keep the good peak shapes for acidic compounds. The mixed XDB-C18 columns with vinyl groups have better lifetime and loadability than XDB-C18 phase at mid pH. Since the amount of dimethylamine groups on the surface is so low, the mixed C18 phases still keep similar selectivity to XDB-C18 column, but with improved peak shapes for basic compounds; thus the methods can be easily transferred to new columns.

### REFERENCE

### Patents:

U.S. 5,134,110 7/28, 1992 Sudo et al.
European Patent Application 90302095.4
U.S. 5,374,755 12/1994 Neue et al. Waters' carbamate patent
U.S. 4,705,725 Kirkland et al Stable Bond Patent
U.S. 5,948,531 Kirkland et al

1. Buchmeiser, M. R., J. Chromatogr. A 2001, 918, 233-266.
2. Neue, U. D. In Encyclopedia ofAnalytical Chemistry, Meyers, R. A., Ed.; John Wiley and Sons: New York, 2001**.**
3. Nawrocki, J., J. Chromatogr. A 1997, 779, 29.
4. Sunseri, J. D.; Gedris, T. E., Langmuir 2003, 19, 8608-8610.
5. Stella, C.; Rudaz, S.; Veuthey, J.-L. Tchapla, A., Chromatographia 2001, 53, S-113-S115.
6. Y. Sudo, J. Chromatogr. A, 1996, 737, 139.
7. Y. Sudo, J. Chromatogr. A, 1997, 757, 21.
8. Nomura, A; Yamada, J.; Tsunoda, K., Anal. Sci. 1987, 3, 209.
9. Buszewski, B.; Kasturi, P.; Gilpin, P. K.; Gangoda, M. E.; Jaroniec, M., Chromatographia, 1994, 39, 155.
10. Buszewski, B.; Jaroniec, M.; Gilpin, P. K., J. Chromatogr. A, 1994, 668, 293.
11. Jaroniec, C. P.; Gilpin, P. K.; Jaroniec, M., J. Chromatogr. A, 1998, 797, 103.
12.Ascah, T. L.; Kallury, K. M. L.; Szafranski, C. A.; Corman, S. D.; Lui, F., J. Liq. Chromatogr. Relat. Technol. 1996, 19, 3049.
13. O'Gara, J. E.; Alden, B. A.; Walter, T. H.; Peterson, J. S.; Niederlander, C. L.; Neue, U. D., Anal. Chem. 1995, 67, 3809.
14. O'Gara, J. E.; Walsh, D. P.; Alden, B. A.; Casellini, P.; Walter, T. H., Anal. Chem. 1999, 71, 2992.
15. Silva, C. R; Jardim, I. C. S. F.; Airoldi, C., J. Chromatogr. A, 2003, 987, 127-138
16. Neue, U. D.; Cheng, Y. F.; Alden, B. A.; Iraneta, P. C.; Phoebe, C. H.; van Tran, K., Chromatographia 2001, 54, 169.
17. Kirkland, J. J.; Henderson, J. W.; DeStefano, J. J.; van Straten, M. A.; Claessens, H. A., J. Chromatogr. A, 1997, 762, 97.
18. Kirkland, J. J.; Herderson, J. W., J. Chromatogr. Sci., 1994, 32, 473-480.
19. Kirkland, J. J.; Adams, J. B. Jr.; van Straten, M. A.; Claessens, H. A., Anal. Chem. 1998, 70, 4344-4352.
20. Chen, W. Patent application PDNO. 10040739-1

## Claims

1. A substrate having a monofunctional silane chemically bonded thereto, at least one monofunctional silane having three groups, R, R' and R", and being of the form: 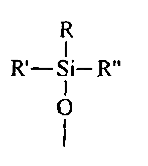 where R' is independently alkenyl, alkynyl, or phenyl, R" is independently alkyl, substituted alkyl, alkenyl, substituted alkenyl, alkynyl, aryl, or substitute aryl, R is independently alkyl, substituted alkyl, alkenyl, substituted alkenyl, alkynyl, aryl, substituted aryl, alkylamine, amide, ether, alcohol, carbamate, ester, an anion exchanger, or a cation exchanger.

2. A substrate as claimed in claim 1, including a mixture of at least two different monofunctional silanes.

3. A substrate as claimed in claim 1, including a mixture of at least three different monofunctional silanes.

4. A substrate as claimed in any preceding claim, wherein said monofunctional silane does not comprise a dimethyl substituted tertiary carbon moiety.

5. A substrate as claimed in any preceding claim, wherein R' comprises vinyl, allyl, ethynyl, or propynyl.

6. A substrate as claimed in any preceding claim, wherein the substrate is formed of a hydrated metal oxide, a hydrated metalloid-oxide, or an organic polymer.

7. A substrate as claimed in claim 6, wherein the metal oxide and metalloid oxide substrate comprise silica, chromia, zirconia, or tin oxide.

8. A substrate as claimed in claim 6 or 7, wherein the substrate is a rigid material coated with silica.

9. A substrate as claimed in any preceding claim, wherein the R, R' and R" groups are different.

10. A substrate as claimed in claim 1 for peptide synthesis comprising a silica substrate, and a silane arranged in the form: 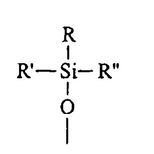 wherein R' comprises vinyl, allyl, ethynyl, or propynyl, R" comprises methyl, ethyl, propyl, isopropyl, vinyl, allyl, ethynyl, or propynyl, R is -(CH₂)₃-NH₂ and the O moiety is covalently attached to the silica substrate.

11. A substrate as claimed in claim 1, wherein R' is -CH=CH₂.

12. A substrate as claimed in claim 1, wherein the R group includes an ion-exchange group.

13. A substrate as claimed in claim 1, wherein the R group includes a site for attachment of a ligand useful in affinity chromatography.

14. A substrate as claimed in claim 1, wherein the R group includes a site for attachment of catalysts.

15. A substrate as claimed in claim 1, wherein the R group provides hydrophobic binding sites suitable for reverse phase chromatography.

16. A substrate as claimed in claim 1, wherein the R group provides hydrophilic binding sites suitable for size exclusion chromatography.

17. A substrate as claimed in claim 12, wherein the ion-exchange group is a weak anion-exchange, strong anion-exchange, weak cation-exchange or strong cation-exchange group.

18. A method for chromatographic separation comprising:
applying a sample to a stationary phase, said stationary phase comprising a stable support structure comprising a substrate as claimed in any preceding claim wherein at least one monofunctional silane has at least one unsaturated hydrocarbon group.

19. A column for use in chromatographic separations comprising:
a substrate as claimed in any of claims 1 to 17 wherein at least one monofunctional silane has at least one unsaturated hydrocarbon group, R', covalently attached to the substrate.

20. A process for the manufacture of a substrate for chromatography, comprising:
(i) preparing divinyl alkyl silanes and monovinyl alkyl silanes for bonding,
(ii) bonding a silica substrate with the divinyl alkyl silane, or monovinyl alkyl silane, or a mixture of two or three silanes with at least one silane having monovinyl alkyl silane to produce a bonded phase,
(iii) bonding at least a fraction of residual unbonded silica surface with a silane selected form the group consisting of monovinyl, divinyl, and trivinyl silane.

21. A process as claimed in claim 20, further comprising the step of contacting the surface with less than about 0.2 µM of an end-capping reagent.

22. A process as claimed in claim 21, wherein the end-capping reagent comprises (dimethylamino)trivinylsilane, chlorotrivinylsilane, (dimethylamino)trivinylsilane, or (dimethylamino)trivinylsilane.

## Patentansprüche

1. Ein Substrat, an das ein monofunktionelles Silan chemisch gebunden ist, wobei zumindest ein monofunktionelles Silan drei Gruppen, R, R' und R", aufweist und folgende Form.aufweist: 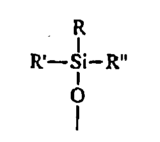 wobei R' unabhängig Alkenyl, Alkynyl oder Phenyl ist, R" unabhängig Alkyl, substituiertes Alkyl, Alkenyl, substituiertes Alkenyl, Alkynyl, Aryl oder substituiertes Aryl ist, R unabhängig Alkyl, substituiertes Alkyl, Alkenyl, substituiertes Alkenyl, Alkynyl, Aryl, substituiertes Aryl, Alkylamin, Amid, Ether, Alkohol, Carbamat, Ester, ein Anionenaustauscher oder ein Kationenaustauscher ist.

2. Ein Substrat gemäß Anspruch 1, das ein Gemisch zumindest zweier unterschiedlicher monofunktioneller Silane umfasst.

3. Ein Substrat gemäß Anspruch 1, das ein Gemisch zumindest dreier unterschiedlicher monofunktioneller Silane umfasst.

4. Ein Substrat gemäß einem der vorhergehenden Ansprüche, bei dem das monofunktionelle Silan keinen durch Dimethyl substituierten Tertiärer-Kohlenstoff-Anteil umfasst.

5. Ein Substrat gemäß einem der vorhergehenden Ansprüche, bei dem R' Vinyl, Allyl, Ethynyl oder Propynyl umfasst.

6. Ein Substrat gemäß einem der vorhergehenden Ansprüche, wobei das Substrat aus einem hydratisierten Metalloxid, einem hydratisierten Metalloidoxid oder einem organischen Polymer gebildet ist.

7. Ein Substrat gemäß Anspruch 6, bei dem das Metalloxid- und das Metalloidoxidsubstrat Siliziumdioxid, Dichromoxid, Zirconiumdioxid oder Zinnoxid umfassen.

8. Ein Substrat gemäß Anspruch 6 oder 7, wobei das Substrat ein mit Siliziumdioxid beschichtetes starres Material ist.

9. Ein Substrat gemäß einem der vorhergehenden Ansprüche, bei dem die R-, die R'- und die R"-Gruppe unterschiedlich sind.

10. Ein Substrat gemäß Anspruch 1 für eine Peptidsynthese, das ein Siliziumdioxidsubstrat und ein in der folgenden Form angeordnetes Silan umfasst: 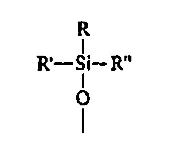 wobei R' Vinyl, Allyl, Ethynyl oder Propynyl umfasst, R" Methyl, Ethyl, Propyl, Isopropyl, Vinyl, Allyl, Ethynyl oder Propynyl umfasst, R-(CH₂)₃-NH₂ ist und der O-Anteil kovalent an das Siliziumdioxidsubstrat angelagert ist.

11. Ein Substrat gemäß Anspruch 1, bei dem R' -CH=CH₂ ist.

12. Ein Substrat gemäß Anspruch 1, bei dem die R-Gruppe eine Ionenaustauschgruppe umfasst.

13. Ein Substrat gemäß Anspruch 1, bei dem die R-Gruppe eine Stelle zur Anlagerung eines Liganden, der bei der Affinitätschromatographie nützlich ist, umfasst.

14. Ein Substrat gemäß Anspruch 1, bei dem die R-Gruppe eine Stelle zur Anlagerung von Katalysatoren umfasst.

15. Ein Substrat gemäß Anspruch 1, bei dem die R-Gruppe hydrophobe Bindungsstellen liefert, die für eine Umkehrphasenchromatographie geeignet sind.

16. Ein Substrat gemäß Anspruch 1, bei dem die R-Gruppe hydrophile Bindungsstellen liefert, die für eine Ausschlusschromatographie geeignet sind.

17. Ein Substrat gemäß Anspruch 12, bei dem die Ionenaustauschgruppe eine schwache Anionenaustausch-, eine starke Anionenaustausch-, eine schwache Kationenaustausch- oder eine starke Kationenaustausch-Gruppe ist.

18. Ein Verfahren zur chromatographischen Trennung, das folgenden Schritt umfasst:
Aufbringen einer Probe auf eine stationäre Phase, wobei die stationäre Phase eine stabile Trägerstruktur aufweist, die ein Substrat gemäß einem der vorhergehenden Ansprüche umfasst, bei dem zumindest ein monofunktionelles Silan zumindest eine ungesättigte Kohlenwasserstoffgruppe aufweist.

19. Eine Säule zur Verwendung bei chromatographischen. Trennungen, die folgendes Merkmal aufweist:
ein Substrat gemäß einem der Ansprüche 1 bis 17, bei dem zumindest ein monofunktionelles Silan zumindest eine ungesättigte Kohlenwasserstoffgruppe, R', aufweist, die kovalent an das Substrat angelagert ist.

20. Ein Prozess zur Herstellung eines Substrats zur Chromatographie, der folgende Schritte umfasst:
(i) Herstellen von Divinylalkylsilanen und Monovinylalkylsilanen zum Binden,
(ii) Binden eines Siliziumdioxidsubstrats mit dem Divinylalkylsilan oder Monovinylalkylsilan oder einem Gemisch aus zwei oder drei Silanen, wobei zumindest ein Silan ein Monovinylalkylsilan aufweist, um eine gebundene Phase zu erzeugen,
(iii) Binden zumindest eines Teils einer restlichen ungebundenen Siliziumdioxidoberfläche mit einem Silan, das aus der aus Monovinyl-, Divinyl- und Trivinylsilan bestehenden Gruppe ausgewählt ist.

21. Ein Prozess gemäß Anspruch 20, der ferner den Schritt des Kontaktierens der Oberfläche mit weniger als etwa 0,2 µM eines Endabdeckungsreagens umfasst.

22. Ein Prozess gemäß Anspruch 21, bei dem das Endabdeckungsreagens (Dimethylamin)trivinylsilan, Chlortrivinylsilan, (Dimethylamin)trivinylsilan oder (Dimethylamin)trivinylsilan umfasst.

## Revendications

1. Substrat ayant un silane monofonctionnel lié chimiquement à celui-ci, au moins un silane monofonctionnel ayant trois groupes, R, R' et R", et étant sous la forme : 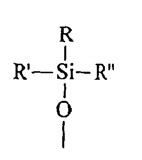 où R' est indépendamment un groupe alcényle, alcynyle ou phényle, R" est indépendamment un groupe alkyle, alkyle substitué, alcényle, alcényle substitué, alcynyle, aryle ou aryle substitué, R est indépendamment un groupe alkyle, alkyle substitué, alcényle, alcényle substitué, alcynyle, aryle, aryle substitué alkylamine, amide, éther, alcool carbamate, ester, un échangeur d'anions ou un échangeur de cations.

2. Substrat selon la revendication 1, incluant un mélange d'au moins deux silanes mono-fonctionnels différents.

3. Substrat selon la revendication 1, incluant un mélange d'au moins trois silanes mono-fonctionnels différents.

4. Substrat selon l'une quelconque des revendications précédentes, dans lequel ledit silane monofonctionnel ne comprend pas de fragment carbone tertiaire substitué par un groupe diméthyle.

5. Substrat selon l'une quelconque des revendications précédentes, dans lequel R' comprend un groupe vinyle, allyle, éthynyle ou propynyle.

6. Substrat selon l'une quelconque des revendications précédentes, dans lequel le substrat est formé d'un oxyde de métal hydraté, d'un oxyde de métalloïde hydraté ou d'un polymère organique.

7. Substrat, selon la revendication 6, dans lequel le substrat d'oxyde de métal et d'oxyde de métalloïde comprend de l'oxyde de silicium, de l'oxyde de chrome, de l'oxyde de zirconium ou de l'oxyde d'étain.

8. Substrat selon la revendication 6 ou 7, dans lequel le substrat est un matériau rigide revêtu d'oxyde de silicium.

9. Substrat selon l'une quelconque des revendications précédentes, dans lequel les groupes R, R' et R" sont différents.

10. Substrat selon la revendication 1 pour une synthèse peptidique comprenant un substrat d'oxyde de silicium, et un silane agencé sous la forme : 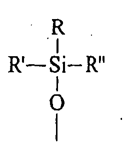 dans laquelle R' comprend un groupe vinyle, allyle, éthynyle ou propynyle, R" comprend un groupe méthyle, éthyle, propyle, isopropyle, vinyle, allyle, éthynyle ou propynyle, R est -(CH₂)₃-NH₂ et le fragment O est fixé de manière covalente au substrat d'oxyde de silicium.

11. Substrat selon la revendication 1, dans lequel R' est -CH=CH₂.

12. Substrat selon la revendication 1, dans lequel le groupe R comporte un groupe échangeur d'ions.

13. Substrat selon la revendication 1, dans lequel le groupe R comporte un site pour la fixation d'un ligand utile dans une chromatographie d'affinité.

14. Substrat selon la revendication 1, dans lequel le groupe R comporte un site pour la fixation de catalyseurs.

15. Substrat selon la revendication 1, dans lequel le groupe R met à disposition des sites de liaison hydrophobe appropriés pour une chromatographie en phase inverse.

16. Substrat selon la revendication 1, dans lequel le groupe R met à disposition des sites de liaison hydrophile appropriés pour une chromatographie d'exclusion-diffusion.

17. Substrat selon la revendication 12, dans lequel le groupe échangeur d'ions est un groupe échangeur d'anions faible, un groupe échangeur d'anions fort, un groupe échangeur de cations faible ou un groupe échangeur de cations fort.

18. Procédé de séparation chromatographique comprenant :
l'application d'un échantillon à une phase stationnaire, ladite phase stationnaire comprenant une structure de support stable comprenant un substrat selon l'une quelconque des revendications précédentes, dans lequel au moins un silane monofonctionnel a au moins un groupe hydrocarboné insaturé.

19. Colonne à utiliser dans des séparations chromatographiques comprenant :
un substrat selon l'une quelconque des revendications 1 à 17, dans lequel au moins un silane monofonctionnel a au moins un groupe hydrocarboné insaturé, R', fixé de manière covalente au substrat.

20. Procédé pour la fabrication d'un substrat pour une chromatographie, comprenant :
(i) la préparation de divinylalkylsilanes et de monovinylalkylsilanes pour une liaison,
(ii) la liaison d'un substrat d'oxyde de silicium avec le divinylalkylsilane, ou le monovinylalkylsilane ou un mélange de deux ou trois silanes, au moins un silane étant de type monovinylalkylsilane pour produire une phase liée,
(iii) la liaison d'au moins une fraction d'une surface d'oxyde de silicium non liée résiduelle avec un silane choisi dans le groupe constitué de monovinyle, divinyle et trivinylsilane.

21. Procédé selon la revendication 20, comprenant en outre l'étape consistant à mettre en contact la surface avec moins d'environ 0,2 µM d'un réactif de coiffage en bout.

22. Procédé selon la revendication 21, dans lequel le réactif de coiffage en bout comprend du (diméthylamino)trivinylsilane, chlorotrivinylsilane, (diméthylamino)trivinylsilane ou (diméthylamino)trivinylsilane.
